# EUROPEAN PATENT SPECIFICATION

(11) **EP 1 269 043 B1**
(45) Date of publication and mention of the grant of the patent: **03.11.2004**
(21) Application number: 01918117.1
(22) Date of filing: 02.04.2001
(51) Int. Cl.: F16H 3/12

(54) **MOTOR VEHICLE GEARBOX**
FAHRZEUGGETRIEBE
BOITE DE VITESSES DE VEHICULE MOTORISE

(30) Priority: 03.04.2000 SE 0001190
(43) Date of publication of application: 02.01.2003
(73) Proprietor: Volvo Lastvagnar AB, 405 08 Göteborg (SE)
(72) Inventor: HEDMAN, Anders, S-440 30 Marstrand (SE)
(74) Representative: Hellbom, Lars Olof
(86) International application number: PCT/SE2001/000713
(87) International publication number: WO 2001/075332

(56) References cited:
- SE-B- 458 846
- SE-C2- 506 223
- SE-C2- 507 366

## Description

The present invention relates to a motor vehicle gearbox, comprising the features as defined in the preamble of claim 1.

SE-A-507 366, for example, discloses a gearbox of the abovementioned type. This proceeds from a so-called "power shift" gearbox with a two-position central synchromesh arrangement, which with two synchromesh gears and a synchromesh clutch on the one intermediate shaft gives six synchromesh functions in a seven-speed gearbox, and is developed in that the one synchromesh gear is designed so that it can also be used for torque transmission in order to provide a further speed, namely an overdrive. This has been achieved in purely practical terms in that one of the normally very narrow synchromesh gears has been widened and provided with clutch members that give a positively interlocking engagement instead of a purely frictional engagement. The bottom gear is obtained by transmitting torque from one intermediate shaft to the other via one of the common gears on the output shaft. For this purpose the common gear is rotatably mounted on the output shaft and provided with clutch members, which lock the gear when torque is to be transmitted from the one intermediate shaft directly to the output shaft.

The object of the present invention is to make possible, in a gearbox of the type described in the introductory part, to transmit the torque by other means in bottom gear, so that the said common gear on the output shaft can be rotationally fixed to the shaft.

According to the invention this is achieved by the features of claim 1.

In this case the primary gear of the one input shaft therefore assumes the function of intermediate gear between the intermediate shafts in bottom gear and the former intermediate gear on the output shaft does not need to be rotatably mounted on the shaft. The clutch can thereby be omitted and the gear can be fixed to the shaft, which makes the design construction simpler and cheaper. The gear can absorb great stresses, since there is no risk of deformation in any bearing.

The invention will be described in more detail with reference to an exemplary embodiment shown in the attached drawing, in which the figure shows a longitudinal section through a gearbox with seven forward gears, plus overdrive and reverse gears.

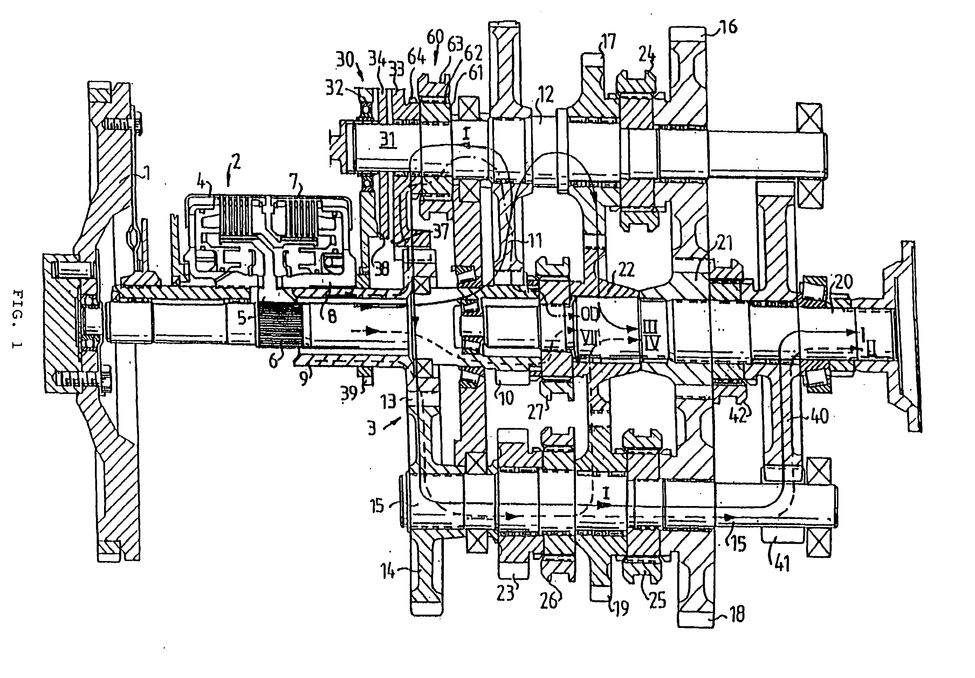

In the figure 1 denotes an engine flywheel, which drives a gearbox 3 according to the invention by way of a wet multi-plate clutch generally denoted by 2. The clutch 2 is a double clutch of a type known in the art and therefore need not be described in more detail. The clutch unit 4 seen on the left of the figure is coupled by way of a sleeve element 5 to a first input shaft 6 in the gearbox, whilst the right-hand clutch unit 7 is coupled by way of a sleeve element 8 to a second input shaft 9 in the form of a hollow shaft, supported concentrically with the first shaft 6. The two clutch units can be engaged and disengaged in a known manner in order to drive the input shafts 6 and 9 alternately. The wet plate clutch shown may be replaced by a double clutch of dry plate type.

The first input shaft 6 is designed with a rack 10, which meshes with a gear 11, which is fixed on a first intermediate shaft 12. The second input shaft 9 is designed with a rack 13, which meshes with a gear 14, which is fixed on a second intermediate shaft 15. The rack 13 is larger than the rack 10, which means that the second intermediate shaft 15 rotates faster that the first for the same input speed on each input shaft (when the intermediate shafts are located largely equidistant from the input shafts).

The intermediate shafts 12 and 15 each carry a pair of freely rotatable gears 16, 17 and 18, 19, of which the gears 16, 18 jointly mesh with a gear 21 fixed on an output shaft 20, whilst the gears 17, 19 mesh with a gear 22 on the output shaft, which latter gear is torsionally fixed to the shaft 20. The shafts are arranged in a V-configuration in order to allow the direction of rotation of either intermediate shaft to be reversed by means of an additional gear 23 on the intermediate shaft 15 for the purpose of reversing, the said additional gear meshing with the gear 11 on the intermediate shaft 12. It is also possible to reverse the direction of rotation of each intermediate shaft by means of a gear supported on a separate shaft in the casing, which meshes with the racks 10 and 23. This gives a freer choice of V-configuration and gear changes and also allows the shafts to be laid in the same plane. The gears 16,17,18,19 and 23 are lockable on their shafts by means of axially displaceable clutch sleeves 24, 25 and 26. A gear 40, freely rotatable on the output shaft 20, meshes with a rack 41 machined directly in the intermediate shaft 15 and can be locked on the shaft 20 by means of a clutch sleeve 42. Machining the rack 41 directly in the intermediate shaft 15 and making the gear 40 lockable on the output shaft eliminates the need for needle bearings on the intermediate shaft gear, which means that this can be designed with a very small diameter, which in turn provides a large transmission step from intermediate shaft to output shaft. By means of a clutch sleeve 27 the input shaft 6 and output shaft 20 can be locked together for direct drive. None of these clutches has individual, conventional synchromesh arrangements.

The first intermediate shaft 12 is instead co-ordinated with a central synchromesh arrangement generally denoted by 30. This comprises a pair of gears 32,33, supported so that they are free to rotate on an extension 31 of the intermediate shaft 12, and an intermediate clutch plate 34 called in claim 1 a friction member, which is axially displaceable by way of axial grooves and bars but cannot rotate relative to the shaft 12. The plate is connected to operating members, not shown further, for controlling the synchromesh. On their sides facing the plate 34 the synchromesh gears 32,33 are designed with friction surfaces 37,38. The left-hand gear 32 meshes with a gear rim 39 on the second input shaft 9. The gear rim 39 has a smaller diameter than the gear rim 10 on the first input shaft. The right-hand synchromesh gear 33 meshes with the rack 13 on the second input shaft and here there is preferably a difference of one or a couple of cogs between the synchromesh gear 33 and the driven gear 14 on the second intermediate shaft.

For a more detailed description of the synchromesh sequence, reference should be made to SE-A-507 366.

In order to be able to use the synchromesh gear 33 also for transmitting torque, it is widened compared to the gear 32 and co-ordinated with a clutch arrangement 60, which provides a positively interlocking engagement. The clutch arrangement 60 comprises a hub 61 fixed to the intermediate shaft 12 and having external grooves and bars 62, which mesh with corresponding internal grooves and bars on a clutch sleeve 63. The gear 33 is designed with a rim having grooves and bars 64.

When torque is to be transmitted by way of the synchromesh gear 33, the gear on the shaft is locked in that the clutch sleeve 63 is displaced axially, so that its grooves and bars engage with grooves and bars 64 of the gear 33. The torque is now transmitted from the primary gear 11 on the intermediate shaft 12 to the primary gear 10 on the inner input shaft 6, which is locked to the output shaft 20 by means of the clutch 27. The line of force is indicated by the dot-dash line OD in the figure, a further gear, an overdrive, being obtained, which gives a higher rotational speed on the output shaft 20 than on the outer input shaft 9. The clutches 60 and 27 are operated by known shift rods and shift forks, not shown further, in such a way that when engaging the overdrive the clutch 60 locks the synchromesh gear 33 on the intermediate shaft 12 at the same time that the clutch 27 locks the inner input shaft 6 to the output shaft.

According to the invention the clutches 60 and 27 and the clutch 42 for the bottom gear wheel 40 on the output shaft 20 are operated so that when engaging bottom gear the clutch 60 locks the synchromesh gear 33 on the intermediate shaft 12 at the same time that the clutch 42 locks the wheel 40 on the output shaft 20 and the clutch 27 is disengaged. The power is now transmitted from the inner driven input shaft 6 by way of the primary gears 10 and 11 to the intermediate shaft 12 and the synchromesh gear 33, and thence to the second intermediate shaft 15 by way of the primary gears 13 and 14. The primary gear 13 on the now fully disengaged outer input shaft 9 here assumes the function of the former disengageable gear 22 as intermediate gear. The line of force is indicated by the solid line I in the figure.

## Claims

1. A motor vehicle gearbox, comprising
at least two concentrically arranged, alternately drivable first and second input shafts (6,9),
first and second intermediate shafts (12,15),
primary gears (10,11) which are carried by the first input shaft (6) and the first intermediate shaft (12) and which mesh with one another for transmitting torque from the first input shaft (6) to the first intermediate shaft (12),
primary gears (13, 14) which are carried by the second input shaft (9) and the second intermediate shaft (15) and which mesh with one another for transmitting torque from the second input shaft (9) to the second intermediate shaft (15),
an output shaft (20),
gears (16,17,18,19,21,22) carried by the intermediate shafts and the output shaft which mesh with one another in pairs for transmitting torque from either of the intermediate shafts to the output shaft and of which at least one gear in each pair is a disengageable wheel,
and at least one gear (21) on the output shaft (20) being permanently torsionally fixed thereto and commonly meshing with disengageable gears (16,18) on the associated intermediate shaft (12,15),
synchromesh members (30), which comprise on the one hand a pair of synchromesh gears (32,33) of different diameters supported on the one intermediate shaft (12), which synchromesh gears are in drive engagement with gear rims (13,39) on the one input shaft (9), and on the other hand a friction member (34), by means of which a drive connection can be established between either synchromesh gear (32,33) and the intermediate shaft (12) in order to adjust the rotational speed of the intermediate shaft, which is drive-connected to the currently undriven input shaft, to a rotational speed determined by the gear selected,
at least one synchromesh gear (33) being co-ordinated with a clutch arrangement (60), which is designed to lock said at least one synchromesh gear on the intermediate shaft, **characterized in that**
the output shaft (20) carries a further gear (22) which is permanently torsionally fixed thereto and which commonly meshes with disengageable gears (17,18) on the associated intermediate shaft (17,19)
and that said at least one synchromesh gear (33) is designed to be locked on its shaft (12) when the currently undriven input shaft is disengaged, in order to permit torque transmission from the one intermediate shaft (12) to the output shaft (20) by way of the currently undriven input shaft (9) and the second intermediate shaft (15).

2. The gearbox according to Claims 1, **characterized in that** the synchromesh gear (33) of smaller diameter has a gear rim with a larger axial extent than the gear rim of the other synchromesh gear (32).

3. The gearbox according to any of Claims 1 to 2, **characterized in that** the clutch arrangement (60) comprises a clutch hub (61) torsionally fixed to the associated intermediate shaft (12), the non-rotatable but axially displaceable hub carrying a clutch sleeve (63) with internal clutch teeth (62), which when the clutch sleeve is displaced in one direction can be brought into engagement with corresponding clutch teeth (64) on said at least one synchromesh gear (33) for locking the latter on the intermediate shaft (12).

## Patentansprüche

1. Motorgetriebe mit:
zumindest einer ersten und einer zweiten konzentrisch angeordneten, abwechselnd antreibbaren Antriebswelle (6, 9),
einer ersten und einer zweiten Zwischenwelle (12, 15),
primären Zahnrädern (10, 11), die von der ersten Antriebswelle (6) und von der ersten Zwischenwelle (12) getragen werden und miteinander kämmen, um ein Drehmoment von der ersten Antriebswelle (6) auf die erste Zwischenwelle (12) zu übertragen,
primären Zahnräder (13, 14), die von der zweiten Antriebswelle (9) und der zweiten Zwischenwelle (15) getragen werden und miteinander kämmen, um ein Drehmoment von der zweiten Antriebswelle (9) auf die zweite Zwischenwelle (15) zu übertragen,
eine Abtriebswelle (20),
Zahnräder (16, 17, 18, 19, 21, 22), die von den Zwischenwellen und der Abtriebswelle getragen werden und miteinander in Paaren kämmen, um ein Drehmoment von einer der beiden Zwischenwellen auf die Abtriebswelle zu übertragen, wobei zumindest ein Zahnrad in jedem Paar ein ausrückbares Rad ist, und
zumindest einem Zahnrad (21) an der Abtriebswelle (20), das permanent daran torsionsfixiert ist und gemeinsam mit ausrückbaren Zahnrädern (16, 18) an der zugehörigen Zwischenwelle (12, 15) kämmt,
Synchrongetriebeelementen (30), die einerseits ein Paar von Synchrongetrieberädern (32, 33) mit unterschiedlichen Durchmessern aufweisen, die an der einen Zwischenwelle (12) gelagert sind und in Antriebseingriff mit Zahnkränzen (13, 39) an der einen Antriebswelle (9) sind, und andererseits ein Reibelement (34), mittels dessen eine Antriebsverbindung zwischen einem der beiden Synchrongetrieberäder (32, 33) und der Zwischenwelle (12) aufgebaut werden kann, um die Drehgeschwindigkeit der Zwischenwelle, welche mit der momentanen nicht angetriebenen Antriebswelle antriebsverbunden ist, auf eine durch den ausgewählten Gang bestimmte Drehgeschwindigkeit einzustellen,
wobei zumindest ein Synchrongetrieberad (33) mit einer Kupplungsanordnung (60) koordiniert ist, welche dazu ausgestaltet ist, das zumindest eine Synchrongetrieberad an der Zwischenwelle zu arretieren,
**dadurch gekennzeichnet, dass**
die Abtriebswelle (20) ein weiteres Zahnrad (22) trägt, das daran permanent torsionsfixiert ist und das gemeinsam mit ausrückbaren Zahnrädern (17, 18) an der zugehörigen Zwischenwelle (17, 19) kämmt, und
das zumindest eine Synchrongetriebezahnrad (33) dazu ausgestaltet ist, an seiner Welle (12) arretiert zu werden, wenn die momentan nicht angetriebene Antriebswelle ausgerückt wird, um die Übertragung eines Drehmoments von der einen Zwischenwelle (12) auf die Abtriebswelle (20) über die momentan nicht angetriebene Antriebswelle (9) und die zweite Zwischenwelle (15) zu ermöglichen.

2. Getriebe nach Anspruch 1, **dadurch gekennzeichnet, dass** das Synchrongetrieberad (33) mit dem kleineren Durchmesser einen Zahnkranz mit einem größeren axialen Abmaß hat als der Zahnkranz des anderen Synchrongetrieberades (32).

3. Getriebe nach einem der Ansprüche 1 und 2, **dadurch gekennzeichnet, dass** die Kupplungsanordnung (60) eine Kupplungsnabe (61) aufweist, die an der zugehörigen Zwischenwelle (12) torsionsfixiert ist, wobei die nicht drehbare, aber axial verschiebbare Nabe eine Kupplungsmuffe (63) mit innen angeordneten Kupplungszähnen (62) trägt, welche, wenn die Kupplungsmuffe in eine Richtung verschoben wird, in Eingriff mit entsprechenden Kupplungszähnen (64) an dem zumindest einen Synchrongetrieberad (33) gebracht werden können, um letzteres an der Zwischenwelle (12) zu arretieren.

## Revendications

1. Boîte de vitesses de véhicule à moteur, comportant
au moins deux premier et second arbres d'entrée (6, 9) pouvant être entraînés alternativement, agencés concentriquement,
des premier et second arbres intermédiaires (12, 15),
des engrenages principaux (10, 11) qui sont supportés par le premier arbre d'entrée (6) et le premier arbre intermédiaire (12), et qui engrènent l'un avec l'autre pour transmettre un couple depuis le premier arbre d'entrée (6) au premier arbre intermédiaire (12),
des engrenages principaux (13, 14) qui sont supportés par le second arbre d'entrée (9) et le second arbre intermédiaire (15), et qui engrènent l'un avec l'autre pour transmettre un couple depuis le second arbre d'entrée (9) au second arbre intermédiaire (15),
un arbre de sortie (20),
des engrenages (16, 17, 18, 19, 21, 22) supportés par les arbres intermédiaires et l'arbre de sortie qui engrènent les uns avec les autres par paires pour transmettre un couple provenant de l'un ou l'autre des arbres intermédiaires à l'arbre de sortie et dont au moins un engrenage de chaque paire est un pignon débrayable,
et au moins un engrenage (21) sur l'arbre de sortie (20) étant fixé torsionnellement de manière permanente sur celui-ci et engrenant conjointement avec des engrenages débrayables (16, 18) situés sur l'arbre intermédiaire associé (12, 15),
des éléments de synchronisation (30), qui comportent d'une part une paire d'engrenages de synchronisation (32, 33) de diamètres différents supportés sur le premier arbre intermédiaire (12), lesquels engrenages de synchronisation sont en prise menante avec des couronnes dentées (13, 39) situées sur le premier arbre d'entrée (9), et d'autre part un élément de friction (34), par l'intermédiaire duquel une liaison d'entraînement peut être établie entre l'un ou l'autre engrenage de synchronisation (32, 33) et l'arbre intermédiaire (12) afin d'ajuster la vitesse de rotation de l'arbre intermédiaire, qui est relié de manière menante à l'arbre d'entrée couramment non-entraîné, à une vitesse de rotation déterminée par l'engrenage sélectionné,
au moins un engrenage de synchronisation (33) étant coordonné à l'aide d'un agencement d'embrayage (60), qui est conçu pour bloquer ledit au moins un engrenage de synchronisation sur l'arbre intermédiaire, **caractérisée en ce que**
l'arbre de sortie (20) supporte un autre engrenage (22) qui est fixé torsionnellement de manière permanente sur celui-ci et qui engrène couramment avec des engrenages débrayables (17, 18) situés sur l'arbre intermédiaire associé (17, 19),
et **en ce que** ledit au moins un engrenage de synchronisation (33) est conçu pour être bloqué sur son arbre (12) lorsque l'arbre d'entrée couramment non-entraîné est libéré, afin de permettre une transmission de couple depuis le premier arbre intermédiaire (12) jusqu'à l'arbre de sortie (20) par l'intermédiaire de l'arbre d'entrée couramment non-entraîné (9) et le second arbre intermédiaire (15).

2. Boîte de vitesses selon la revendication 1, **caractérisée en ce que** l'engrenage de synchronisation (33) de plus petit diamètre a une couronne dentée ayant une étendue axiale plus grande que la couronne dentée de l'autre engrenage de synchronisation (32).

3. Boîte de vitesses selon la revendication 1 ou 2, **caractérisée en ce que** l'agencement d'embrayage (60) comporte un moyeu d'embrayage (61) fixé torsionnellement sur l'arbre intermédiaire associé (12), le moyeu axialement déplaçable mais non-rotatif supportant un manchon d'embrayage (63) ayant des dents d'embrayage internes (62) qui, lorsque le manchon d'embrayage est déplacé dans une direction peuvent être amenées en prise avec des dents d'embrayage correspondantes (64) situées sur ledit au moins un engrenage de synchronisation (33) pour bloquer ce dernier sur l'arbre intermédiaire (12).
